# EUROPÄISCHE PATENTSCHRIFT

(11) **EP 3 815 859 B1**
(45) Veröffentlichungstag und Bekanntmachung des Hinweises auf die Patenterteilung: **27.04.2022**
(21) Anmeldenummer: 20197177.7
(22) Anmeldetag: 21.09.2020
(51) Int. Cl.: B25J 13/08, B25J 15/00

(54) **VERFAHREN ZUM AUTOMATISCHEN HANDHABEN VON OBJEKTEN**
METHOD FOR AUTOMATICALLY HANDLING OBJECTS
PROCÉDÉ DE MANIPULATION AUTOMATIQUE DES OBJETS

(30) Priorität: 31.10.2019 DE 102019129417
(43) Veröffentlichungstag der Anmeldung: 05.05.2021
(73) Patentinhaber: SICK AG, 79183 Waldkirch (DE)
(72) Erfinder: OVERDICK, Michael, 79312 Emmendingen (DE); STEWART, Trevor, 78343 Gaienhofen (DE); BLÜMCKE, Thomas, 79312 Emmendingen (DE); KLEMM, Markus, 01159 Dresden (DE)
(74) Vertreter: Manitz Finsterwald Patent- und Rechtsanwaltspartnerschaft mbB

(56) Entgegenhaltungen:
- EP-A1- 3 517 888
- DE-A1-102010 053 002
- DE-A1-102017 108 329
- JP-A- 2009 066 683
- US-A1- 2014 145 458
- US-A1- 2019 091 875

## Beschreibung

Die Erfindung betrifft ein Verfahren zum automatischen Handhaben von Objekten, bei welchem die Objekte mittels eines Objektgreifers oder dergleichen gehalten werden und in dem gehaltenen Zustand einem Handhabungs-, Transport- oder Montageprozess unterzogen werden.

Das automatische Handhaben von Objekten ist in vielen Bereichen der Technik von Bedeutung, beispielsweise bei der Bearbeitung von Produkten oder bei der Förderung von Materialien. Demgemäß sind in der vorliegenden Offenbarung unter dem Begriff "Objekte" beliebige Bauteile, Baugruppen, Produkte, Halbzeuge und Verpackungen, aber auch Rohstoffe und andere Materialien zu verstehen.

Bei der automatischen Objekthandhabung kommen häufig Roboter zum Einsatz, die einen Objektgreifer als Endeffektor aufweisen. Aber auch mittels Halte-, Hebe- und Transportvorrichtungen kann eine automatische Objekthandhabung im Sinne der vorliegenden Offenbarung durchgeführt werden. Die Objekte können hierbei durch einen Objektgreifer oder durch einen Objekthalter gehalten werden.

Auf dem Gebiet der Objekthandhabung ist im Allgemeinen die Einhaltung einer vorgegebenen Objektposition wichtig, damit der Handhabungs-, Transport- oder Montageprozess korrekt durchgeführt wird. Selbst wenn eine Abweichung von der Soll-Position nur relativ selten vorkommt, kann dies aufgrund des hohen Durchsatzes gängiger Produktionslinien zu einer inakzeptablen Beeinträchtigung der Anlagenverfügbarkeit und/oder der Produktqualität führen.

In der JP 2009 066683 A ist eine Roboterhand mit einem System aus mehreren Kraftsensoren wie kapazitiven Sensoren sowie einem Mehrachsensensor vorgesehen, um ein Verrutschen eines gegriffenen Objekts zu detektieren.

Die EP 3 517 888 A1 offenbart ein taktiles Sensorsystem für einen Objektgreifer, das zwei elastisch miteinander verbundene Plattenelemente sowie einen Wegsensor zur Erfassung einer Plattenverschiebung umfasst.

Die DE 10 2010 053 002 A1 offenbart einen Objektgreifer, der mit rasterartigen Sensorfeldern in Form von Drucksensoren versehen ist.

In der US 2014/0145458 A1 ist ein Objektgreifer offenbart, der einen Schwingungsdetektor aufweist. Mit diesem kann ein Verrutschen des Objekts oder ein Verlust des Objekts während der Handhabung detektiert werden.

Die DE 10 2017 108 329 A1 offenbart eine Fräsmaschine, bei der ein Roboter zum Auswechseln der Werkstücke vorgesehen ist. Am Roboterarm ist außer einem Objektgreifer auch ein Sensorhalter mit einem als Ultraschallsensor ausgeführten Kraftsensor angeordnet.

In der US 2019/0091875 A1 ist ein Robotergreifer offenbart, dessen Finger mit einer Anordnung von Ultraschallsensoren versehen sind. Die Sensorsignale werden dazu herangezogen, Informationen über zu greifende Objekte zu erhalten.

Man ist bestrebt, die Zuverlässigkeit von automatischen Objekthandhabungs-Verfahren zu erhöhen.

Die Lösung der Aufgabe erfolgt durch ein Verfahren mit den Merkmalen des Anspruchs 1.

Bei einem erfindungsgemäßen Verfahren ist vorgesehen, dass mittels wenigstens eines an dem Objektgreifer oder dergleichen angeordneten Positionssensors die Position wenigstens eines Oberflächenabschnitts des gehaltenen Objekts relativ zu einer Kontaktfläche des Objektgreifers oder dergleichen überwacht wird und bei einer Änderung der Position während des Handhabungs-, Transport- oder Montageprozesses ein Warn- oder Steuersignal erzeugt wird.

Durch Überwachen der Objektposition auf Änderungen während des Handhabungs-, Transport- oder Montageprozesses ist ein einfaches Erkennen von Fehlersituationen wie zum Beispiel eines Verrutschens des gehaltenen Objekts möglich. Es ist bei einem erfindungsgemäßen Verfahren nicht unbedingt erforderlich, die tatsächliche Objektposition zu ermitteln oder das Objekt zu klassifizieren, sodass der Aufwand relativ gering ist. Insbesondere kann auf zeitraubende Einlernprozesse verzichtet werden. Ein Vorteil der Erfindung besteht darin, dass auch Beschädigungen der Objekte, also zum Beispiel ein Zerbrechen während eines Handhabungs-, Transport- oder Montageprozesses, erkannt werden können, weil sich hierbei ebenfalls die Positionen von Oberflächenabschnitten des Objekts relativ zur Kontaktfläche ändern.

Mittels des Warn- oder Steuersignals kann dafür gesorgt werden, dass ein Verrutschen oder eine Beschädigung eines gehaltenen Objekts die nachfolgenden Prozesse nicht beeinträchtigt, indem erfindungsgemäß mittels Ablegen und Neugreifen eine Positionskorrektur durchgeführt wird oder als nicht erfindungsgemäße Alternative das beschädigte Objekt einem Ausschussbehälter zugeführt wird. Dementsprechend ist es bevorzugt, dass das Warn- oder Steuersignal einer Steuereinrichtung zugeführt wird, welche in der Lage ist, Kompensationsmaßnahmen einzuleiten. Bei bestimmten Anwendungen , welche nicht Teil des Schutzumfangs sind, kann jedoch auch ein optisches und/oder akustisches Warnsignal ausreichend sein.

Vorzugsweise werden die Objekte während des Handhabungs-, Transport- oder Montageprozesses bewegt. Es könnte im Prinzip jedoch auch zum Beispiel sein, dass das gehaltene Objekt während des Handhabungs-, Transport- oder Montageprozesses stillsteht und ein Bearbeitungswerkzeug relativ zum stillstehenden Objekt bewegt wird.

Eine automatische Objekthandhabung soll im vorliegenden Text so verstanden werden, dass sie grundsätzlich auch mittels manuell gesteuerter Objektgreifer oder Objekthalter erfolgen kann. Objekte, die auf einer Objektauflage aufliegen, sollen ebenfalls als "gehalten" gelten, nämlich in dem Sinne, dass ihre Position relativ zur Auflagefläche definiert ist. Besonders vorteilhaft kann das erfindungsgemäße Verfahren sein, wenn die Objekte mittels eines automatisch gesteuerten und/oder eines automatisch bewegten Objektgreifers oder dergleichen gehalten werden. Insbesondere kann vorteilhaft vorgesehen sein, dass die Objekte in dem Sinne automatisch gehandhabt werden, dass der Handhabungs-, Transport- oder Montageprozess einer selbständigen Prozessführung unterliegt oder einen programmierten Ablauf aufweist.

Bevorzugt wird die Position des wenigstens einen Oberflächenabschnitts wiederholt oder kontinuierlich erfasst.

Für die Überwachung ist es nicht zwingend erforderlich, das Signal des Positionssensors tatsächlich einem oder mehreren bestimmten Oberflächenabschnitten des Objekts zuzuordnen. Vielmehr kann es auch ausreichen, das gesamte Signal allgemein zu analysieren, da es durch die Gesamtheit der Oberflächenabschnitte des Objekts beeinflusst wird.

Es ist vorgesehen, dass die Position des Oberflächenabschnitts durch eine Amplitudenauswertung und/oder durch eine Signalformauswertung überwacht wird. Zusätzlich kann die Position des Oberflächenabschnitts durch eine Laufzeitmessung überwacht werden. Eine Laufzeitmessung ist insofern von Vorteil, als der Positionssensor nur ein relatives Zeitsystem benötigt und daher vergleichsweise einfach aufgebaut sein kann. Im Gegensatz hierzu erfordern taktile Sensoren üblicher Weise eine relativ komplexe Konstruktion des zugehörigen Objektgreifers wie zum Beispiel das Vorsehen von beweglichen Platten. Für die Laufzeitmessung kann ein Positionssensor verwendet werden, der einen Sender, einen Empfänger sowie eine für Zeitdifferenzmessungen ausgebildete Steuerschaltung aufweist. Anhand von Änderungen der Signalamplitude eines von dem Positionssensor empfangenen Signals können ebenfalls Fehlersituationen wie zum Beispiel ein Verrutschen des gehaltenen Objekts erkannt werden. Hierbei kann je nach Anwendungssituation eine Amplitudenverringerung oder eine Amplitudenerhöhung auf einen Fehler hinweisen. Weiterhin kann eine Auswertung der Signalsignatur eines Teils des Signals oder des gesamten Signals erfolgen. Das heißt es kann ganz allgemein der Signalverlauf analysiert werden, wobei der Signalverlauf ähnlich betrachtet wird wie ein Fingerabdruck.

Bei der Erfindung wird die Position des Oberflächenabschnitts mittels wenigstens eines Ultraschallwandlers überwacht. Ultraschallwandler sind vergleichsweise kompakt und preisgünstig. Zudem weisen sie, insbesondere im Nahbereich, nur eine geringe Störanfälligkeit auf und werden durch übliche Umgebungsbedingungen nicht oder kaum beeinträchtigt. Ein weiterer Vorteil besteht darin, dass Ultraschallwandler robust gegenüber Verunreinigungen der Grenzflächen sind.

Erfindungsgemäß wird bei vorliegendem Warn- oder Steuersignal ein Ablegen und Neugreifen des Objekts veranlasst.

Es kann vorgesehen sein, dass die Positionen mehrerer oder aller beobachteten Oberflächenabschnitte des gehaltenen Objekts gleichzeitig überwacht werden, insbesondere mittels jeweiliger Positionssensoren. Dies ermöglicht eine besonders exakte Positionsüberwachung. Insbesondere können auf diese Weise auch Objektdrehungen oder Objektbeschädigungen an unterschiedlichen Stellen erkannt werden.

Eine spezielle Ausgestaltung der Erfindung sieht vor, dass die Position des Oberflächenabschnitts vor dem Handhabungs-, Transport- oder Montageprozess erfasst und abgespeichert wird und danach die Position des Oberflächenabschnitts während des Handhabungs-, Transport- oder Montageprozesses über einen vorgegebenen Überwachungszeitraum wiederholt oder kontinuierlich erneut erfasst und mit der abgespeicherten Position verglichen wird. Das heißt es wird davon ausgegangen, dass sich das Objekt zu einem vorgegebenen Zeitpunkt, der vorzugsweise nach dem Greifen oder Halten, aber noch vor dem Beginn des Handhabungs-, Transport- oder Montageprozesses liegt, in der Soll-Position befindet. Jede Veränderung der Position bedeutet dann eine unerwünschte Abweichung von der Soll-Position. Ein Vergleich zwischen der abgespeicherten Position und der aktuellen Position ist auf besonders einfache Weise möglich, beispielsweise mittels einer Subtraktionsstufe. Der Überwachungszeitraum kann sich über den gesamten Handhabungs-, Transport- oder Montageprozess erstrecken oder mit diesem identisch sein.

Bevorzugt wird die Position des Oberflächenabschnitts vor jedem Handhabungs-, Transport- oder Montageprozess neu erfasst und abgespeichert. Die Festlegung einer absoluten Soll-Position ist dann nicht erforderlich. Außerdem können unterschiedliche Objekte gehandhabt werden, ohne dass ein Einlernen erforderlich ist.

Es kann vorgesehen sein, dass eine Abweichung zwischen einer aktuell erfassten Position und der abgespeicherten Position ermittelt wird und das Warn- oder Steuersignal erzeugt wird, wenn die Abweichung einen vorgegebenen Schwellwert übersteigt. Dies kann auf einfache und kostengünstige Weise mittels eines Komparators oder dergleichen durchgeführt werden. Der Schwellwert kann anwendungsspezifisch festgelegt werden.

Die Erfindung betrifft auch eine Vorrichtung zum automatischen Handhaben von Objekten, umfassend einen Objektgreifer oder dergleichen, der wenigstens eine Kontaktfläche für einen haltenden Kontakt mit einem Objekt aufweist, sowie wenigstens einen an dem Objektgreifer oder dergleichen angeordneten Positionssensor.

Bei einer erfindungsgemäßen Vorrichtung ist der Positionssensor dazu ausgebildet, die Position wenigstens eines Oberflächenabschnitts des gehaltenen Objekts relativ zu einer Kontaktfläche des Objektgreifers oder dergleichen zu überwachen. Weiterhin weist eine erfindungsgemäße Vorrichtung eine elektronische Steuereinrichtung auf, die mit dem wenigstens einen Positionssensor in Signalverbindung steht und dazu ausgebildet ist, bei einer Änderung der Position während eines Handhabungs-, Transport- oder Montageprozesses ein Warn- oder Steuersignal zu erzeugen.

Eine solche Vorrichtung ist trotz kostengünstiger Konstruktion in der Lage, Fehlersituationen wie zum Beispiel ein Verrutschen eines gehaltenen Objekts zu erkennen.

Die elektronische Steuereinrichtung kann dazu ausgebildet sein, während des Betriebs der Vorrichtung ein wie vorstehend beschriebenes Verfahren auszuführen.

Bei der Erfindung ist der wenigstens eine Positionssensor ein Ultraschallwandler, insbesondere ein Ultraschall-Transducer.

Bei der erfindungsgemäßen Vorrichtung ist vorgesehen, dass der Ultraschallwandler eine Schallaustrittsfläche aufweist und derart an dem Objektgreifer oder dergleichen angeordnet ist, dass die Schallaustrittsfläche luftspaltlos mit einem gehaltenen Objekt in Kontakt bringbar ist, also zum Beispiel zumindest im Wesentlichen bündig mit der Kontaktfläche ist. Der Ultraschallwandler kann dann in direktem Kontakt mit dem Objekt betrieben werden. Dies ermöglicht eine Messung, die ausschließlich auf einer Übertragung von Körperschall beruht. Eine Ausbreitung der Ultraschallwellen durch die Luft ist dann nicht erforderlich, was die Ausgestaltung der Vorrichtung vereinfacht, weil weniger Reflexionen auftreten.

Die elektronische Steuereinrichtung ist erfindungsgemäß dazu ausgebildet, bei vorliegendem Warn- oder Steuersignal ein Ablegen und Neugreifen des Objekts zu veranlassen.

Gemäß einer Ausführungsform der Erfindung sind mehrere Ultraschallwandler an verschiedenen Stellen des Objektgreifers oder dergleichen und/oder in verschiedenen Ausrichtungen vorgesehen. Dies ermöglicht eine besonders exakte Überwachung der Objektposition und insbesondere auch der Objektlage, also beispielsweise der Drehstellung des Objekts.

Weiterbildungen der Erfindung sind auch den abhängigen Ansprüchen, der Beschreibung sowie der beigefügten Zeichnung zu entnehmen.

Die Erfindung wird nachfolgend beispielhaft unter Bezugnahme auf die Zeichnung beschrieben.
- Fig. 1: ist eine vereinfachte Seitenansicht einer erfindungsgemäßen Vorrichtung zum automatischen Handhaben von Objekten.
- Fig. 2: zeigt einen Objektgreifer einer alternativ gestalteten erfindungsgemäßen Vorrichtung zum automatischen Handhaben von Objekten einmal mit Objekt und einmal ohne Objekt.
- Fig. 3: zeigt einen beispielhaften zeitlichen Verlauf eines Sensorsignals der in Fig. 2 dargestellten Vorrichtung jeweils für eine Situation mit Objekt und ohne Objekt.

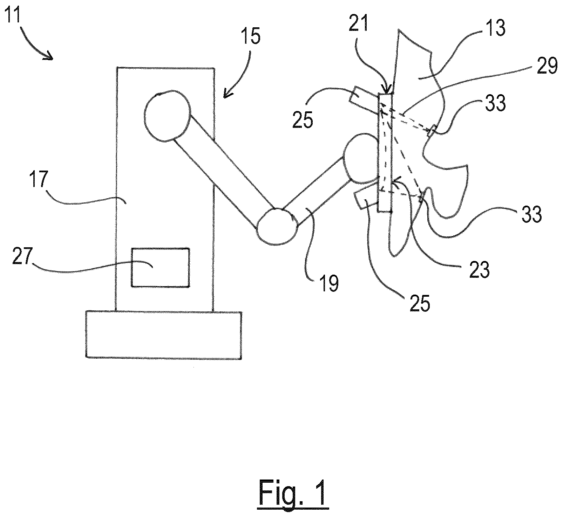

Die in Fig. 1 gezeigte Vorrichtung 11 dient zum automatischen Handhaben eines Objekts 13 und umfasst einen Roboter 15, der in bekannter Weise eine ortsfeste Basis 17, eine bewegliche Kinematik 19 sowie einen Endeffektor in Form eines Objektgreifers 21 aufweist. Der Objektgreifer 21 ist lediglich schematisch dargestellt und kann in Abhängigkeit von der Anwendung als Zangengreifer, Magnetgreifer oder Sauggreifer ausgeführt sein. Wie in Fig. 1 ersichtlich weist der Objektgreifer 21 eine Kontaktfläche 23 auf, die für einen Kontakt mit dem zu greifenden Objekt 13 ausgebildet ist. Die Kontaktfläche 23 kann wie gezeigt eben sein, sodass sie für ein flächiges Anliegen einer ebenen Fläche des Objekts 13 geeignet ist. Bei dem Objekt 13 kann es sich um ein beliebiges Produkt handeln, das einer Bearbeitung zuzuführen ist.

An dem Objektgreifer 21 sind zwei Ultraschallwandler 25 derart angeordnet, dass ihre Schallaustrittsflächen luftspaltlos mit dem gehaltenen Objekt 13 in Kontakt zu bringen sind. Vorzugsweise sind die Ultraschallwandler 25 als Transducer ausgeführt und können so als Schallwellensender und Schallwellenempfänger (beide in Fig. 1 nicht dargestellt) arbeiten. Bei dem dargestellten Ausführungsbeispiel sind die beiden Ultraschallwandler 25 jeweils an einem Randbereich des Objektgreifers 21 angeordnet. Die Ultraschallwandler 25 stehen mit einer elektronischen Steuereinrichtung 27 in Signalverbindung, die beispielhaft im Bereich der Basis 17 gezeigt ist, jedoch auch in den Objektgreifer 21 integriert sein könnte.

Die Schallwellensender der Ultraschallwandler 25 senden während des Betriebs der Vorrichtung 11 Ultraschallsignale 29 aus. Die ausgesendeten Ultraschallsignale 29 breiten sich als Körperschall im gehaltenen Objekt 13 aus und werden von Oberflächenabschnitten 33 des Objekts 13 reflektiert. Die reflektierten Ultraschallsignale 29 werden von den zugehörigen Schallwellenempfängern der Ultraschallwandler 25 empfangen und ausgewertet. Somit kann mittels der Ultraschallwandler 25 die Position von verschiedenen Oberflächenabschnitten 33 relativ zu der Kontaktfläche 23 des Objektgreifers 21 erfasst werden. Der Übersichtlichkeit halber sind in Fig. 1 lediglich zwei beispielhafte Oberflächenabschnitte 33 dargestellt.

Die elektronische Steuereinrichtung 27 ist dazu ausgebildet, mittels der Ultraschallwandler 25 die Positionen mehrerer Oberflächenabschnitte 33 des gehaltenen Objekts 13 relativ zu der Kontaktfläche 23 zu überwachen und bei einer Änderung der Position während des Handhabungs-, Transport- oder Montageprozesses ein Warn- oder Steuersignal zu erzeugen. Speziell ist die elektronische Steuereinrichtung 27 dazu ausgebildet, allgemein empfangene Ultraschallsignale 29 zu erfassen und bei jeglichen Änderungen der empfangenen Ultraschallsignale 29 das Warn- oder Steuersignal zu erzeugen.

Für die Überwachung werden vor jedem Handhabungs-, Transport- oder Montageprozess die empfangenen Ultraschallsignale, also die Echo-Werte, erfasst und abgespeichert. Während des Handhabungs-, Transport- oder Montageprozesses werden dann die Echo-Werte wiederholt oder kontinuierlich erneut erfasst und mit den abgespeicherten Echo-Werten verglichen. Jedes Mal, wenn es zu einer Abweichung kommt und die Abweichung einen vorgegebenen Schwellwert übersteigt, wird das Warn- oder Steuersignal erzeugt. Es ist dann nämlich davon auszugehen, dass das Objekt 13 verrutscht ist oder beschädigt wurde. Die elektronische Steuereinrichtung 27 kann dazu ausgebildet sein, bei vorliegendem Warn- oder Steuersignal ein Ablegen und Neugreifen des Objekts 13 zu veranlassen.

Es ist auch möglich, Beschädigungen des Objektgreifers 21 zu erkennen, indem ein objektfreies Signal gespeichert und mit einem späteren objektfreien Signal verglichen wird.

Die Erfindung ist bei Robotern 15 mit Objektgreifern 21 besonders vorteilhaft, könnte jedoch auch bei Hebe- oder Transportvorrichtungen eingesetzt werden. Beispielsweise könnte die Objektauflage eines nicht dargestellten Bandförderers oder führerlosen Transportsystems eine Kontaktfläche 23 bilden, auf welcher ein Verrutschen des Objekts 13 festgestellt wird.

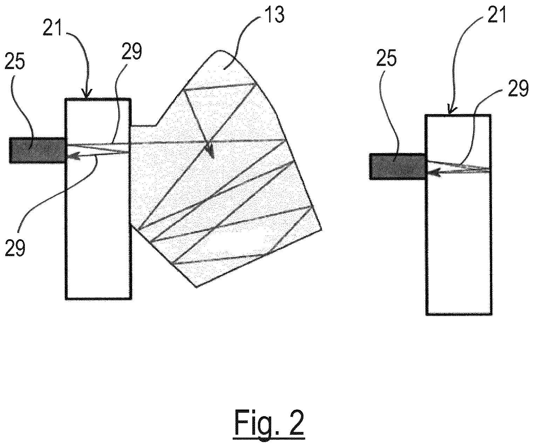

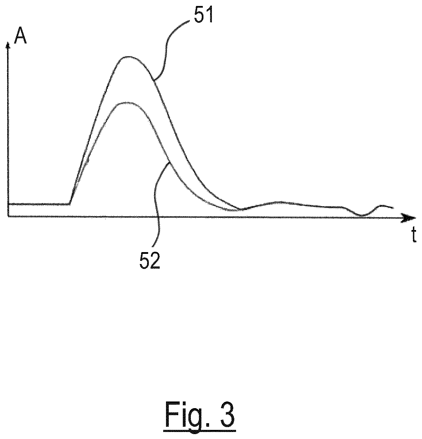

In Fig. 2 ist zu erkennen, dass sich durch einen Objektverlust eine Erhöhung der Amplitude der empfangenen Ultraschallsignale 29 ergeben kann. Wenn sich das Objekt 13 wie im linken Teil von Fig. 2 am Objektgreifer 21 befindet, weist das empfangene Signal nur eine geringe Amplitude auf, weil das Objekt 13 als Schallabsorber wirkt und die Ultraschallsignale 29 vom Ultraschallwandler 25 weg reflektiert. Wenn wie im rechten Teil von Fig. 2 kein Objekt vorhanden ist, weist das empfangene Ultraschallsignal 29 dagegen eine relativ große Amplitude auf. Der entsprechende Verlauf der Signalamplituden A in Abhängigkeit von der Zeit t ist in Fig. 3 dargestellt, wobei die obere Kurve 51 der Situation ohne Objekt und die untere Kurve 52 der Situation mit Objekt entspricht. Die Kurven 51, 52 können hinsichtlich bestimmter Charakteristika überwacht werden, um so zwischen einzelnen Situationen zu unterscheiden.

### Bezugszeichenliste:

- 11: Vorrichtung zum automatischen Handhaben von Objekten
- 13: Objekt
- 15: Roboter
- 17: Basis
- 19: Kinematik
- 21: Objektgreifer
- 23: Kontaktfläche
- 25: Ultraschallwandler
- 27: elektronische Steuereinrichtung
- 29: Ultraschallsignal
- 33: Oberflächenabschnitt

## Patentansprüche

1. Verfahren zum automatischen Handhaben von Objekten (13), bei welchem die Objekte (13) mittels eines Objektgreifers (21) oder dergleichen gehalten werden und in dem gehaltenen Zustand einem Handhabungs-, Transport- oder Montageprozess unterzogen werden,
wobei mittels wenigstens eines an dem Objektgreifer (21) oder dergleichen angeordneten Positionssensors (25) die Position wenigstens eines Oberflächenabschnitts (33) des gehaltenen Objekts (13) relativ zu einer Kontaktfläche (23) des Objektgreifers (21) oder dergleichen überwacht wird und bei einer Änderung der Position während des Handhabungs-, Transport- oder Montageprozesses ein Warn- oder Steuersignal erzeugt wird,
wobei die Position des Oberflächenabschnitts (33) durch eine Amplitudenauswertung und/oder durch eine Signalformauswertung überwacht wird und wobei die Position des Oberflächenabschnitts (33) mittels wenigstens eines Ultraschallwandlers (25) überwacht wird,
wobei bei vorliegendem Warn- oder Steuersignal ein Ablegen und Neugreifen des Objekts (13) veranlasst wird.

2. Verfahren nach Anspruch 1,
**dadurch gekennzeichnet,**
**dass** die Position des wenigstens einen Oberflächenabschnitts (33) wiederholt oder kontinuierlich erfasst wird.

3. Verfahren nach Anspruch 1 oder 2,
**dadurch gekennzeichnet,**
**dass** die Position des Oberflächenabschnitts (33) ferner durch eine Laufzeitmessung überwacht wird.

4. Verfahren nach einem der vorstehenden Ansprüche,
**dadurch gekennzeichnet,**
**dass** die Positionen mehrerer Oberflächenabschnitte (33) des gehaltenen Objekts (13) gleichzeitig überwacht werden, insbesondere mittels jeweiliger Positionssensoren (25).

5. Verfahren nach einem der vorstehenden Ansprüche,
**dadurch gekennzeichnet,**
**dass** die Position des Oberflächenabschnitts (33) vor dem Handhabungs-, Transport- oder Montageprozess erfasst und abgespeichert wird und danach die Position des Oberflächenabschnitts (33) während des Handhabungs-, Transport- oder Montageprozesses über einen vorgegebenen Überwachungszeitraum wiederholt oder kontinuierlich erneut erfasst und mit der abgespeicherten Position verglichen wird.

6. Verfahren nach Anspruch 5,
**dadurch gekennzeichnet,**
**dass** die Position des Oberflächenabschnitts (33) vor jedem Handhabungs-, Transport- oder Montageprozess neu erfasst und abgespeichert wird.

7. Verfahren nach Anspruch 5 oder 6,
**dadurch gekennzeichnet,**
**dass** eine Abweichung zwischen einer aktuell erfassten Position und der abgespeicherten Position ermittelt wird und das Warn- oder Steuersignal erzeugt wird, wenn die Abweichung einen vorgegebenen Schwellwert übersteigt.

8. Vorrichtung (11) zum automatischen Handhaben von Objekten (13), umfassend einen Objektgreifer (21) oder dergleichen, der wenigstens eine Kontaktfläche (23) für einen haltenden Kontakt mit einem Objekt (13) aufweist, wenigstens einen an dem Objektgreifer (21) oder dergleichen angeordneten Positionssensor (25), der dazu ausgebildet ist, die Position wenigstens eines Oberflächenabschnitts (33) des gehaltenen Objekts (13) relativ zu einer Kontaktfläche (23) des Objektgreifers (21) oder dergleichen zu überwachen, und einer elektronischen Steuereinrichtung (27), die mit dem wenigstens einen Positionssensor (25) in Signalverbindung steht und dazu ausgebildet ist, bei einer Änderung der Position während eines Handhabungs-, Transport- oder Montageprozesses ein Warn- oder Steuersignal zu erzeugen, wobei der wenigstens eine Positionssensor ein Ultraschallwandler (25) ist und wobei der Ultraschallwandler (25) eine Schallaustrittsfläche aufweist und derart an dem Objektgreifer (21) oder dergleichen angeordnet ist, dass die Schallaustrittsfläche luftspaltlos mit einem gehaltenen Objekt (13) in Kontakt bringbar ist,
wobei die elektronische Steuereinrichtung (27) dazu ausgebildet ist, bei vorliegendem Warn- oder Steuersignal ein Ablegen und Neugreifen des Objekts (13) zu veranlassen.

9. Vorrichtung nach Anspruch 8,
**dadurch gekennzeichnet,**
**dass** die elektronische Steuereinrichtung (27) dazu ausgebildet ist, während des Betriebs der Vorrichtung (11) ein Verfahren nach einem der Ansprüche 1 bis 7 auszuführen.

10. Vorrichtung nach Anspruch 8 oder 9,
**dadurch gekennzeichnet,**
**dass** mehrere Ultraschallwandler (25) an verschiedenen Stellen des Objektgreifers (21) oder dergleichen und/oder in verschiedenen Ausrichtungen vorgesehen sind.

## Claims

1. A method for automatically handling objects (13) in which the objects (13) are held by means of an object gripper (21) or the like and are subjected to a handling process, a transport process or an assembly process in the held state,
wherein the position of at least one surface section (33) of the held object (13) relative to a contact surface (23) of the object gripper (21) or the like is monitored by means of at least one position sensor (25) arranged at the object gripper (21) or the like and
a warning signal or control signal is generated in the event of a change of the position during the handling process, the transport process or the assembly process;
wherein the position of the surface section (33) is monitored by an amplitude evaluation and/or by a signal shape evaluation, and wherein the position of the surface section (33) is monitored by means of at least one ultrasonic transducer (25);
wherein a placement and a new gripping of the object (13) are initiated when a warning signal or control signal is present.

2. A method in accordance with claim 1,
**characterized in that**
the position of the at least one surface section (33) is repeatedly or continuously detected.

3. A method in accordance with claim 1 or claim 2,
**characterized in that**
the position of the surface section (33) is further monitored by a transit time measurement.

4. A method in accordance with any one of the preceding claims, **characterized in that**
the positions of a plurality of surface sections (33) of the held object (13) are simultaneously monitored, in particular by means of respective position sensors (25).

5. A method in accordance with any one of the preceding claims, **characterized in that**
the position of the surface section (33) is detected and stored before the handling process, the transport process or the assembly process and the position of the surface section (33) is then repeatedly or continuously detected again during the handling process, the transport process or the assembly process over a predefined monitoring period and is compared with the stored position.

6. A method in accordance with claim 5,
**characterized in that**
the position of the surface section (33) is newly detected and stored before each handling process, transport process or assembly process.

7. A method in accordance with claim 5 or claim 6,
**characterized in that**
a deviation between a currently detected position and the stored position is determined and the warning signal or control signal is generated if the deviation exceeds a predefined threshold value.

8. An apparatus (11) for automatically handling objects (13), comprising an object gripper (21) or the like which has at least one contact surface (23) for a holding contact with an object (13); at least one position sensor (25) which is arranged at the object gripper (21) or the like and which is configured to monitor the position of at least one surface section (33) of the held object (13) relative to a contact surface (23) of the object gripper (21) or the like; and an electronic control device (27) which is in signal connection with the at least one position sensor (25) and which is configured to generate a warning signal or control signal in the event of a change of the position during a handling process, a transport process or an assembly process; wherein the at least one position sensor is an ultrasonic transducer (25), and wherein the ultrasonic transducer (25) has a sound output surface and is arranged at the object gripper (21) or the like such that the sound output surface can be brought into contact with a held object (13) without an air gap;
wherein the electronic control device (27) is configured to initiate a placement and a new gripping of the object (13) when a warning signal or control signal is present.

9. An apparatus in accordance with claim 8,
**characterized in that**
the electronic control device (27) is configured to perform a method in accordance with any one of the claims 1 to 7 during the operation of the apparatus (11).

10. An apparatus in accordance with claim 8 or claim 9,
**characterized in that**
a plurality of ultrasonic transducers (25) are provided at different positions of the object gripper (21) or the like and/or in different orientations.

## Revendications

1. Procédé de manipulation automatique d'objets (13),
dans lequel
les objets (13) sont maintenus au moyen d'un préhenseur d'objets (21) ou similaire et sont soumis, dans l'état maintenu, à un processus de manipulation, de transport ou de montage,
la position d'au moins une portion de surface (33) de l'objet maintenu (13) par rapport à une surface de contact (23) du préhenseur d'objets (21) ou similaire est surveillée au moyen d'au moins un capteur de position (25) disposé sur le préhenseur d'objets (21) ou similaire, et
un signal d'avertissement ou de commande est généré en cas de modification de la position pendant le processus de manipulation, de transport ou de montage,
la position de la portion de surface (33) est surveillée par une évaluation de l'amplitude et/ou par une évaluation de la forme du signal, et
la position de la portion de surface (33) est surveillée au moyen d'au moins un transducteur à ultrasons (25),
en présence d'un signal d'avertissement ou de commande, une dépose et une nouvelle préhension de l'objet (13) sont déclenchées.

2. Procédé selon la revendication 1,
**caractérisé en ce que**
la position de ladite au moins une portion de surface (33) est détectée de manière répétée ou continue.

3. Procédé selon la revendication 1 ou 2,
**caractérisé en ce que**
la position de la portion de surface (33) est en outre surveillée par une mesure du temps de parcours.

4. Procédé selon l'une des revendications précédentes,
**caractérisé en ce que**
les positions de plusieurs portions de surface (33) de l'objet maintenu (13) sont surveillées simultanément, en particulier au moyen de capteurs de position respectifs (25).

5. Procédé selon l'une des revendications précédentes,
**caractérisé en ce que**
la position de la portion de surface (33) est détectée et mémorisée avant le processus de manipulation, de transport ou de montage, puis la position de la portion de surface (33) est à nouveau détectée de manière répétée ou continue sur une période de surveillance prédéfinie pendant le processus de manipulation, de transport ou de montage, et est comparée à la position mémorisée.

6. Procédé selon la revendication 5,
**caractérisé en ce que**
la position de la portion de surface (33) est à nouveau détectée et mémorisée avant chaque processus de manipulation, de transport ou de montage.

7. Procédé selon la revendication 5 ou 6,
**caractérisé en ce que**
un écart entre une position actuellement détectée et la position mémorisée est déterminé, et le signal d'avertissement ou de commande est généré lorsque l'écart dépasse une valeur seuil prédéfinie.

8. Dispositif (11) pour la manipulation automatique d'objets (13), comprenant un préhenseur d'objets (21) ou similaire, qui présente au moins une surface de contact (23) pour un contact de maintien avec un objet (13), au moins un capteur de position (25) qui est disposé sur le préhenseur d'objet (21) ou similaire et qui est réalisé pour surveiller la position d'au moins une portion de surface (33) de l'objet maintenu (13) par rapport à une surface de contact (23) du préhenseur d'objets (21) ou similaire, et un dispositif de commande électronique (27) qui est en liaison de signalisation avec ledit au moins un capteur de position (25) et qui est réalisé pour générer un signal d'avertissement ou de commande en cas de modification de la position pendant un processus de manipulation, de transport ou de montage, dans lequel
ledit au moins un capteur de position est un transducteur à ultrasons (25), et
le transducteur à ultrasons (25) présente une surface de sortie sonore et est disposé sur le préhenseur d'objets (21) ou similaire de telle sorte que la surface de sortie sonore puisse être mise en contact sans entrefer avec un objet (13) maintenu,
le dispositif de commande électronique (27) est réalisé pour déclencher une dépose et une nouvelle préhension de l'objet (13), en présence d'un signal d'avertissement ou de commande.

9. Dispositif selon la revendication 8,
**caractérisé en ce que**
le dispositif de commande électronique (27) est réalisé pour mettre en oeuvre un procédé selon l'une des revendications 1 à 7 pendant le fonctionnement du dispositif (11).

10. Dispositif selon la revendication 8 ou 9,
**caractérisé en ce que**
plusieurs transducteurs à ultrasons (25) sont prévus à différents endroits du préhenseur d'objets (21) ou similaire et/ou dans différentes orientations.
